Europäisches Patentamt

(19) European Patent Office

Office européen des brevets

(11) Numéro de publication : **0 147 271**
**B1**

(12) **FASCICULE DE BREVET EUROPÉEN**

(45) Date de publication du fascicule du brevet :
**11.01.89**

(51) Int. Cl.⁴ : **G 01 P 15/09**

(21) Numéro de dépôt : **84402414.1**

(22) Date de dépôt : **27.11.84**

(54) **Capteur d'accélérations axiales.**

(30) Priorité : 02.12.83 FR 8319294
29.05.84 FR 8408380

(43) Date de publication de la demande :
03.07.85 Bulletin 85/27

(45) Mention de la délivrance du brevet :
11.01.89 Bulletin 89/02

(84) Etats contractants désignés :
DE FR GB IT SE

(56) Documents cités :
FR--A-- 2 463 413
US--A-- 3 060 333
US--A-- 3 075 098
US--A-- 3 487 238
US--A-- 4 354 131

(73) Titulaire : REGIE NATIONALE DES USINES RENAULT
Boîte postale 103 8-10 avenue Emile Zola
F-92109 Boulogne-Billancourt (FR)

RENIX ELECTRONIQUE S.A.
Avenue du Mirail Boîte Postale-1149
F-31036 Toulouse (FR)

(72) Inventeur : Lombard, Claude
60, rue Corneille
F-78150 Le Chesnay (FR)
Inventeur : Montaron, Bernard
Résidence Le Parc de Gounon Immeuble Les Buis
11, rue St Odile F-31100 Toulouse (FR)
Inventeur : Catier, Gérard
26, rue Emile Duployé
F-92130 Issy les Moulineaux (FR)
Inventeur : Moyses, Claude
232, rue de Courcelles
F-75017 Paris (FR)

## Description

La présente invention a pour objet un capteur d'accélérations et notamment de détection de cliquetis sur moteur à combustion interne, comportant d'une part un boîtier comprenant une semelle destinée à être fixée dans la pièce à étudier et un chapeau comportant des moyens de connexion de sortie du capteur et d'autre part un élément piézoélectrique, une masse sismique et des moyens de serrage les liant mécaniquement à la semelle du boîtier et leur appliquant une précontrainte par l'intermédiaire d'éléments agissant comme ressort.

Un capteur du type ci-dessus, encore appelé accéléromètre, est décrit dans le FR-A 2 463 413. La masse subit les vibrations et les transmet à l'élément piézoélectrique qui les transforme en signal électrique. Les électrodes associées à l'élément piézoélectrique sont connectées à la sortie du capteur par des fils conducteurs et des isolants sont interposés. La réponse de ces capteurs n'est pas totalement satisfaisante notamment du fait des connexions.

La présente invention a pour but de fournir un capteur ayant une réponse de grande qualité grâce notamment à des connexions réalisées sous forme de ruban dont la raideur n'interfère pas avec les contraintes exercées sur l'élément piézoélectrique par la masse sismique. La faible hauteur de cette masse et la faible épaisseur du ruban souple, de l'ordre de quelques dizaines de microns, donnent à la vis de serrage comprimant l'élément piézoélectrique une faible longueur et donc une grande raideur. La sensibilité latérale est réduite. Ce ruban présente l'avantage de s'écraser peu sous la contrainte mécanique à température élevée, d'être isolant et de permettre la réalisation de connexions souples, légères et peu encombrantes.

Le capteur selon l'invention est caractérisé en ce qu'il comporte de plus un ruban de matériau isolant souple sur une même face duquel sont disposées deux métallisations distinctes, constituées chacune par une pastille et par un conducteur de liaison issu de la pastille et aboutissant à une zone métallisée de connexion située à l'une des extrémités du ruban, ce ruban souple étant replié de part et d'autre de l'élément piézoélectrique de sorte que les pastilles soient en contact électrique avec les deux faces de l'élément piézoélectrique et que les zones soient en contact électrique avec les moyens de connexion en sortie du capteur.

D'autres caractéristiques et avantages de l'invention apparaîtront dans la description qui suit, illustrée par les figures suivantes :

La figure 1 est une vue en coupe transversale d'un capteur de cliquetis suivant l'invention, selon un premier mode de réalisation ;

La figure 2 est une vue éclatée du même capteur ;

La figure 3 est une vue de face du ruban souple avant montage du capteur, selon un premier mode de réalisation ;

La figure 4 est une variante de réalisation montrant une connexion directe du ruban polyimide sur une prise de sortie ;

La figure 5 est une courbe donnant la tension de sortie d'un capteur en fonction de la fréquence pour deux valeurs d'accélération différentes ;

La figure 6 est une vue en coupe transversale d'un capteur selon l'invention, selon un second mode de réalisation ;

La figure 7 est une vue de face du ruban souple avant montage du capteur, selon un second mode de réalisation.

Les différents éléments assurant les mêmes fonctions en vue des mêmes résultats sont référencés identiquement dans les différentes figures.

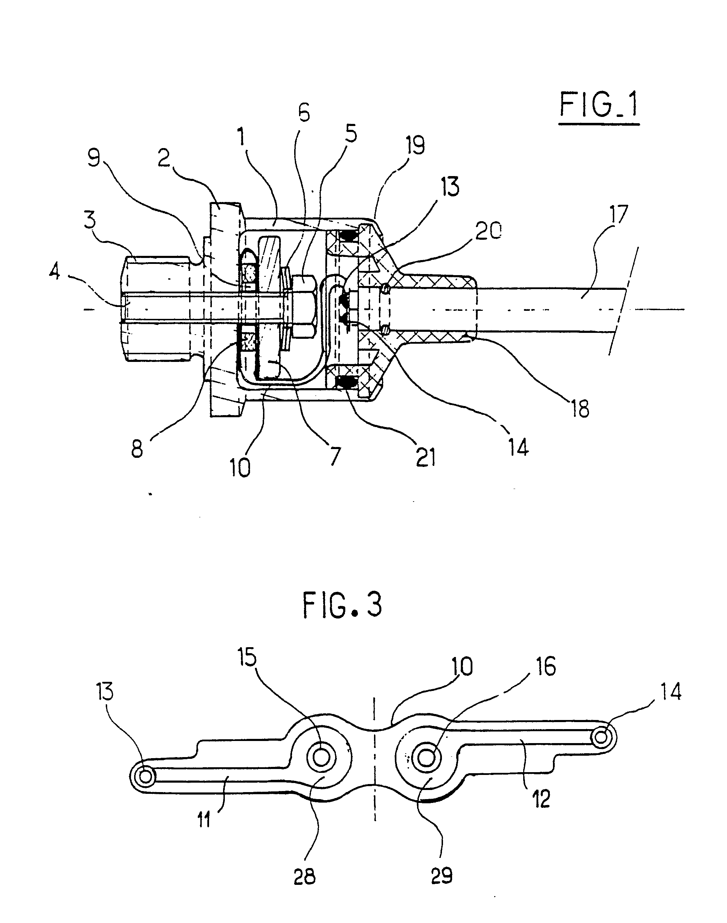

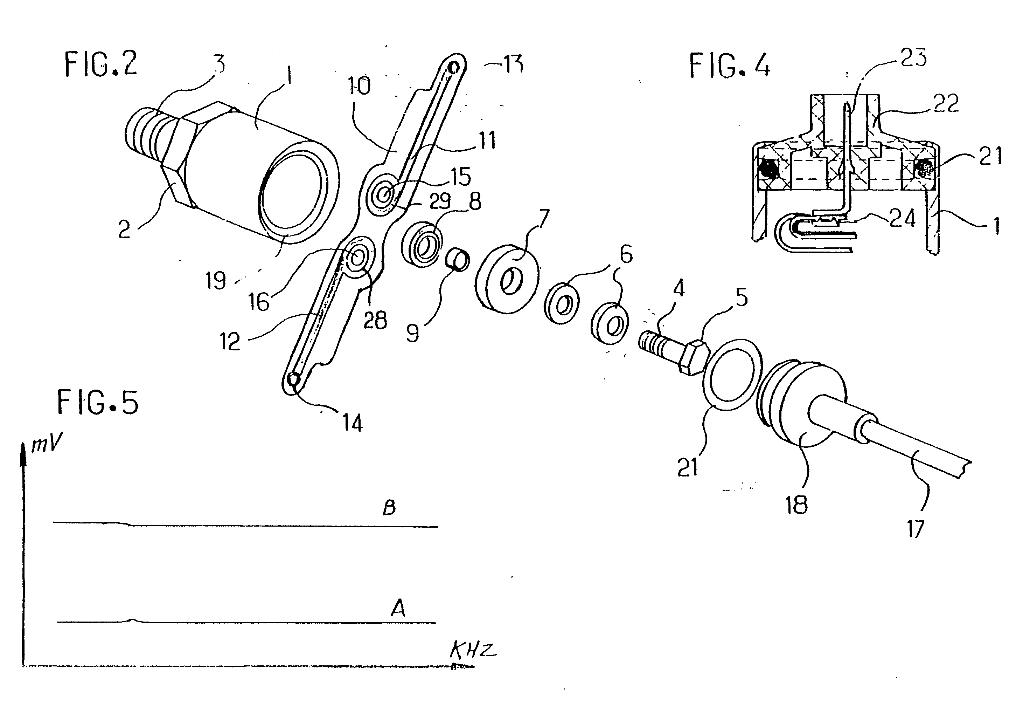

La figure 1 représente un capteur selon l'invention après montage des différents éléments qui le composent. Tandis que la figure 2 en montre une vue éclatée avant assemblage.

Il comporte d'une part un boîtier 1, généralement en acier, comprenant une semelle 2 rigide portant un filetage 3 destiné à être vissé dans la pièce dont on veut mesurer les vibrations. Sur le chapeau 18 du boîtier sont fixés des moyens de connexion de sortie du capteur. Le capteur comporte d'autre part un élément piézoélectrique 8 contre lequel appuie une masse sismique 7 par l'intermédiaire de moyens de serrage les liant mécaniquement à la semelle du boîtier et leur appliquant une précontrainte grâce à des éléments agissant comme ressorts. Les moyens de serrage sont par exemple constitués par une vis 4 de fort diamètre comprenant une tête 5. Cette vis 4 doit être aussi peu déformable que possible et peut être traversante. Dans ce cas, l'élément piézoélectrique 8, la masse sismique 7 et les éléments agissant comme ressort sont enfilés autour de la vis 4. Les éléments agissant comme ressort sont par exemple constitués par des rondelles élastiques coniques 6, du type Belleville notamment. On notera sur la figure 1 que le point d'appui des rondelles coniques 6 est sensiblement en regard de l'élément piézoélectrique 8 et donc à l'intérieur du périmètre de celui-ci.

Le capteur comporte de plus des moyens de connexion entre l'élément piézoélectrique 8 et les moyens de sortie, constitués par un ruban 10 de matériau isolant souple sur une même face duquel sont disposées deux métallisations distinctes assurant la connexion électrique. Ces métallisations sont réalisées par exemple par dépôt de cuivre étamé. Comme le montre plus précisément la figure 3, chacune de ces métallisations est constituée par une pastille 28-29, de dimensions voisines de celles de l'élément piézoélectrique 8 et par un conducteur de liaison 11-12 issu de la pastille et aboutissant à une zone métallisée de connexion 13-14 située à l'une des extrémités du ruban. Ce ruban souple 10, au cours du montage du capteur, est replié de part et d'autre de l'élément piézoélectrique 8 de sorte que les pastilles conductrices soient en contact électrique avec les deux faces de l'élément piézoélectrique, jouant le rôle d'électrodes, collectant les charges électriques apparaissant de part et d'autre de l'élément piézoélectrique 8, et de sorte que les zones 13 et 14 soient en contact électrique avec les moyens de connexion en sortie du capteur.

Le ruban souple 10 sert ainsi de connexion électrique mais également d'isolation électrique entre l'élément piézoélectrique 8 et la masse sismique 7 d'une part et la semelle 2 du boîtier 1 d'autre part. Ce ruban présente donc l'avantage de réduire le nombre de pièces disposées dans le capteur, puisqu'il remplace deux rondelles isolantes à placer de part et d'autre de l'élément piézoélectrique, d'en diminuer l'encombrement axial et le poids total. C'est pour ces mêmes raisons que le capteur selon l'invention comporte une masse sismique relativement plate, en forme de disque.

Dans le cas d'une vis traversante 4 autour de laquelle sont enfilés la masse sismique et l'élément piézoélectrique notamment, les pastilles conductrices 28-29 déposées sur le ruban isolant sont percées par une ouverture 15-16 destinée au passage de la vis. Pour assurer, dans ce cas, l'isolation électrique entre la vis 4 et l'élément piézoélectrique 8, ces pastilles conductrices ont un diamètre intérieur supérieur au diamètre de l'ouverture de passage de la vis. Un produit adhésif de contact peut être ajouté aux faces du canon isolant 9 pour permettre le prémontage de l'ensemble ruban 10, élément piézoélectrique 8, canon 9, chapeau 18 avant insertion dans le boîtier du capteur 1. Le matériau isolant constituant le ruban s'écrase peu sous la contrainte mécanique lors d'essais à température élevée.

Comme le montrent les figures 1 et 2, les moyens de connexion de sortie du capteur sont constitués par un câble 17 surmoulé dans le chapeau 18 du boîtier 1, en plastique par exemple, serti en 19 sur un épaulement du boîtier 1.

Le câble 17 porte un joint d'arrêt 20 évitant son arrachement ainsi qu'un joint torique 21 assurant l'étanchéité de l'appareil entre chapeau 18 et boîtier 1. Les deux fils du câble 17 sont connectés électriquement — par soudage par exemple — aux deux zones métallisées de connexion 13 et 14 situées aux extrémités du ruban 10, ces zones étant constituées dans ce cas par des trous ou œillets métallisés.

Dans le cas de la figure 4, les moyens de connexion de sortie du capteur sont constitués par un connecteur à broches. Sur le boîtier 1 du capteur est fixée une prise de connexion en matériau isolant 22 portant au moins une broche métallique 23 dont l'extrémité 24 située dans le boîtier 1 est destinée à enserrer les extrémités du ruban 10 au niveau des œillets métallisés. On réalise ainsi une connexion sans soudure à grande cadence de fabrication.

Le fonctionnement du capteur reste conforme aux réalisations de ce type c'est-à-dire, que ce sont les variations de contrainte exercées sur l'élément piézoélectrique 8 par la masse sismique sous l'effet des vibrations qui font apparaître des charges et donc des tensions sur les deux faces de l'élément piézoélectrique.

D'éventuelles vibrations de flexion de la rondelle plate 7 servant de masse sismique gêneront peu le fonctionnement comme le montre la figure 4 qui est un relevé de tension de sortie du capteur après redressement pour deux valeurs d'accélération.

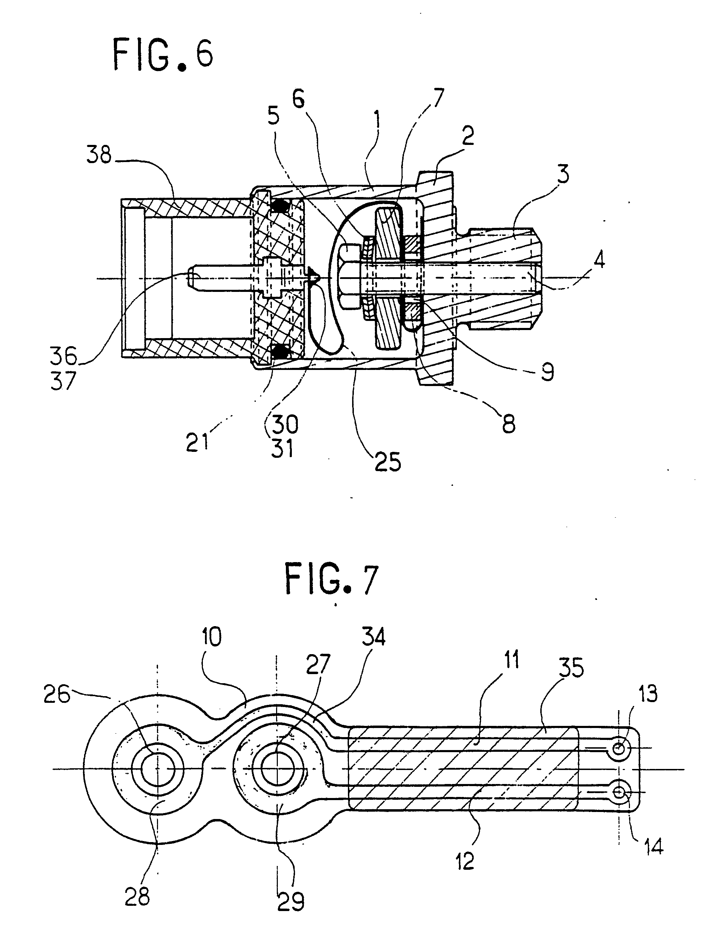

La figure 6 est une vue en coupe transversale d'un capteur dans lequel le ruban souple servant de connexion entre l'élément piézoélectrique 8 et la sortie du capteur est réalisé selon un mode différent de celui de la figure 3. Dans ce second mode de réalisation, les conducteurs de liaison 11 et 12 aboutissent à une même extrémité du ruban, permettant ainsi de réduire la surface du ruban utilisée et, dans une certaine mesure, l'apport à l'élément sensible piézoélectrique de masses mobiles indésirables.

Comme précédemment, sur une même face du ruban isolant souple 10 — figure 7 — sont disposées deux métallisations distinctes, constituées par deux pastilles 28 et 29 alignées, dont l'une 28 est à une extrémité du ruban, et par deux conducteurs de liaison 11 et 12 issus chacun d'une pastille, disposés parallèlement et aboutissant à deux zones métallisées de connexion 13 et 14 situées à l'autre extrémité du ruban. Pour cela le conducteur 11 issu de la pastille 28 contourne la pastille 29, en formant un coude 34. Le ruban 10 a donc une forme dissymétrique. Dans le cas d'une vis de serrage 4 traversante, les pastilles 28 et 29 sont percées par une ouverture 15-16.

Comme précédemment, au cours du montage du ruban 10 dans le boîtier 1 du capteur, le ruban est replié de part et d'autre de l'élément piézoélectrique 8 pour réaliser les électrodes. Les zones métallisées de connexion 13 et 14 étant placées côte à côte sur le ruban, elles peuvent être réalisées simplement par des pastilles trouées ou non, puisqu'elles se présentent du même côté par rapport aux moyens de connexion de sortie du capteur. Sur la figure 6, ces moyens de connexion sont constitués par un connecteur 38, en plastique surmoulé par exemple, comportant deux languettes conductrices 36 et 37 que l'on fait passer à travers les pastilles trouées du ruban et que l'on connecte électriquement, par brasure tendre à l'étain par exemple.

Pour éviter le contact des conducteurs 11 et 12 avec le boîtier métallique 1, un ruban de protection 35 est déposé sur le ruban isolant 10 par dessus les conducteurs 11 et 12.

L'invention n'est pas bien entendu limitée aux modes de réalisation décrits et représentés. Elle comprend également tous les équivalents techniques des moyens décrits ainsi que leurs combinaisons, si celles-ci sont mises en œuvre dans le cadre des revendications.

**Revendications**

1. Capteur d'accélérations axiales et notamment de détection de cliquetis sur moteur à combustion interne, comportant d'une part un boîtier (1) comprenant une semelle (2) destinée à être fixée dans la pièce à étudier et un chapeau (18) comportant des moyens de connexion de sortie du capteur et d'autre part un élément piézoélectrique (8), une masse sismique (7) et des moyens de serrage (4) les liant mécaniquement à la semelle du boîtier et leur appliquant une précontrainte par l'intermédiaire d'éléments agissant comme ressort (6), caractérisé en ce qu'il comporte de plus un ruban (10) de matériau isolant souple sur une même face duquel sont disposées deux métallisations distinctes, constituées chacune par une pastille (28-29) et par un conducteur de liaison (11-12) issu de la pastille et aboutissant à une zone métallisée de connexion (13-14) située à l'une des extrémités du ruban, ce ruban souple étant replié de part et d'autre de l'élément piézoélectrique (8) de sorte que les pastilles soient en contact électrique avec les deux faces de l'élément piézoélectrique et que les zones (13 et 14) soient en contact électrique avec les moyens de connexion en sortie du capteur.

2. Capteur selon la revendication 1, caractérisé en ce que les deux pastilles (28 et 29) sont alignées, l'une (28) étant à une extrémité du ruban (10) et en ce que les deux conducteurs de liaison (11 et 12) issus chacun d'une pastille, sont disposés parallèlement et aboutissent à deux zones métallisées de connexion (13 et 14) situées à l'autre extrémité du ruban (10), le conducteur de liaison (11) de la pastille (28) devant contourner l'autre pastille (29), en formant un coude (34).

3. Capteur selon les revendications 1 ou 2, dont les moyens de serrage sont constitués par une vis traversante (4) autour de laquelle sont enfilés l'élément piézoélectrique (8), la masse sismique (7) et les éléments agissant comme ressort, caractérisé en ce que le ruban isolant souple (10) est percé d'une ouverture au niveau de chaque pastille située en regard de chaque face de l'élément piézoélectrique destinée au passage de la vis (4).

4. Capteur selon la revendication 1, caractérisé en ce que les zones métallisées (13 et 14) de connexion, aux extrémités du ruban (10) sont constitués par des oeillets métallisés.

5. Capteur selon la revendication 2, caractérisé en ce que les zones métallisées (13 et 14) de connexion, à l'une des extrémités du ruban (10) sont constituées par des pastilles, percées ou non d'une ouverture.

6. Capteur selon l'une des revendications précédentes dont les moyens de connexion de sortie sont constitués par un câble fixé dans le chapeau du capteur caractérisé en ce que les deux oeillets métallisés ou les deux pastilles sont connectés électriquement aux deux fils du câble (17).

7. Capteur selon l'une des revendications 1 à 5 dont les moyens de connexion de sortie sont constitués par un connecteur à broches, caractérisé en ce qu'il comporte de plus une prise de connexion en matériau isolant (22) portant au moins une broche métallique (23) dont l'extrémité (24) située dans le boîtier (1) est destinée à enserrer les extrémités du ruban (10) au niveau des œillets ou des pastilles.

8. Capteur selon l'une des revendications précédentes, caractérisé en ce que le ruban (10) de matériau isolant souple est en polyimide.

## Claims

1. Sensor for detecting axial accelerations and particularly for detecting pinking in an internal combustion engine, comprising on the one hand a casing (1) having a base (2) and adapted to be fixed into the piece to be studied and having a cap (18) comprising sensor output connection means and on the other a piezoelectric element (8), a seismic mass (7) and clamping means (4) connecting them mechanically to the base of the casing and applying a prestressing force via elements which act as a spring (6), characterised in that it comprises moreover a ribbon (10) of flexible insulating material on one and the same face of which there are deposited two different metallic areas each consisting of a tab (28-29) and a connecting conductor (11-12) starting at the tab and ending at a metallised connection zone (13-14) situated at one of the ends of the ribbon, this flexible ribbon being folded back on either side of the piezoelectric element (8) so that the tabs are in electrical contact with the two faces of the piezoelectric element and so that the zones (13 and 14) are in electrical contact with the sensor output connection means.

2. Sensor according to Claim 1, characterised in that the two tabs (28 and 29) are aligned, one of them — (28) — being at one end of the ribbon (10) and in that the two connecting conductors (11 and 12) which each start from a tab, are disposed parallel with each other and end at two metallised connection zones (13 and 14) situated at the other end of the ribbon (10), the connecting conductor (11) of the tab (28) being required to pass around the other tab (29), forming an elbow (34).

3. Sensor according to Claims 1 or 2, of which the clamping means consist of a through-bolt (4) on which are fitted the piezoelectric element (8), the seismic mass (7) and the elements which act as a spring, characterised in that the flexible insulating ribbon (10) comprises an aperture at the level of each tab situated opposite each face of the piezoelectric element which is intended to provide a passage for the bolt (4).

4. Sensor according to Claim 1, characterised in that the metallised connection zones (13 and 14) at the ends of the ribbon (10) consist of metallised eyelets.

5. Sensor according to Claim 2, characterised in that the metallised connection zones (13 and 14) at one of the ends of the ribbon (10) consist of tabs in which an aperture may or need not be provided.

6. Sensor according to one of the preceding Claims, of which the output connection means consist of a cable fixed in the cap of the sensor, characterised in that the two metallised eyelets or the two tabs are electrically connected to the two wires of the cable (17).

7. Sensor according to one of Claims 1 to 5, of which the output connection means consist of a pin-type connecter, characterised in that it comprises moreover a connection socket of insulating material (22) carrying at least one metal pin (23) of which the end (24) situated in the casing (1) is intended to grip the ends of the ribbon (10) at the level of the eyelets or tabs.

8. Sensor according to one of the preceding Claims, characterised in that the ribbon (10) of flexible insulating material is of polyimide.

**Patentansprüche**

1. Aufnehmer für axiale Beschleunigungen, insbesondere zur Feststellung des Klingelns von Verbrennungsmotoren, der einerseits ein Gehäuse (1) aufweist mit einer Fußplatte (2) zur Befestigung an dem zu untersuchenden Teil und einer Kappe (18), die eine Anschlußanordnung für den Aufnehmer enthält und der andererseits ein piezoelektrisches Element (8), eine seismische Masse (7) und eine Klemmanordnung (4) aufweist, um sie mechanisch mit der Fußplatte des Gehäuses zu verbinden und ihnen eine Vorspannung zu erteilen, mittels als Feder (6) wirkender Teile, dadurch gekennzeichnet, daß er außerdem ein Band (10) aus einem weichen isolierenden Material aufweist, auf dessen einer Seite zwei getrennte Metallisierungen angeordnet sind, deren jede aus einem Plättchen (28, 29) und einem Verbindungsleiter (11, 12) besteht, der vom Plättchen ausgeht und in einer metallisierten Anschlußzone (13, 14) mündet, die an einem Ende des Bands angeordnet ist, wobei das weiche Band beidseits des piezoelektrischen Elements (18) derart gefaltet ist, daß die Plättchen im elektrischen Kontakt mit den beiden Flächen des piezoelektrischen Elements stehen und daß die Zonen (13, 14) im elektrischen Kontakt mit den Ausgangsanschlüssen des Aufnehmers stehen.

2. Aufnehmer nach Anspruch 1, dadurch gekennzeichnet, daß die zwei Plättchen (28, 29) zueinander ausgerichtet sind, wobei das eine (28) an einem Ende des Bandes (10) angeordnet ist und daß die beiden Verbindungsleiter (11, 12), die jeweils von einem Plättchen ausgehen, parallel zueinander angeordnet sind und in zwei metallisierten Anschlußzonen (13, 14) münden, die am anderen Ende des Bandes (10) angeordnet sind, wobei der Verbindungsleiter (11) des Plättchens (28) um das andere Plättchen (29) herum derart angeordnet ist, daß er einen Bogen (34) bildet.

3. Aufnehmer nach Ansprüchen 1 oder 2, deren Klemmanordnung aus einer durchgehenden Schraube (4) besteht, um die das piezoelektrische Element (8), die seismische Masse (7) und die als Feder wirkenden Teile gewickelt sind, dadurch gekennzeichnet, daß das isolierende weiche Band (10) von einer Öffnung durchsetzt ist auf Höhe eines jeden Plättchens, das gegenüber einer jeden Seite des piezoelektrischen Elements angeordnet ist zur Aufnahme der Schraube (4).

4. Aufnehmer nach Anspruch 1, dadurch gekennzeichnet, daß die metallisierten Anschlußzonen (13, 14) an den Enden des Bandes (10) als metallisierte Öse ausgestaltet sind.

5. Aufnehmer nach Anspruch 2, dadurch gekennzeichnet, daß die metallisierten Anschlußzonen (13, 14) an einem Ende des Bandes (10) aus Plättchen bestehen, die entweder eine oder keine Öffnung aufweisen.

6. Aufnehmer nach einem der vorhergehenden Ansprüche, dessen Ausgangsanschluß aus einem Kabel besteht, das in der Aufnehmerabdeckung befestigt ist, dadurch gekennzeichnet, daß die beiden metallisierten Ösen oder die beiden Plättchen elektrisch mit den beiden Kabeldrähten (17) verbunden sind.

7. Aufnehmer nach einem der Ansprüche 1 bis 5, dessen Ausgangsanschluß aus Kontaktstiften besteht, dadurch gekennzeichnet, daß er außerdem einen Anschluß aus einem isolierenden Material (22) aufweist, mit wenigstens einem metallischen Steckerstift (23), dessen Ende (24) im Gehäuse (1) sitzt und die Enden des Bandes (10) auf Höhe der Ösen oder der Plättchen einklemmt.

8. Aufnehmer nach einem der vorhergehenden Ansprüche, dadurch gekennzeichnet, daß das Band (10) aus weichem isolierenden Material ein Polyimid ist.

FIG_1

FIG.3

FIG.2

FIG.4

FIG.5

mV

B

A

KHZ

EP 0 147 271 B1

# FIG.6

# FIG.7